# FASCICULE DE BREVET EUROPEEN

(11) **EP 3 217 288 B1**
(45) Date de publication et mention de la délivrance du brevet: **25.01.2023**
(21) Numéro de dépôt: 17157413.0
(22) Date de dépôt: 22.02.2017
(51) Int. Cl.: G06F 12/0804, G06F 12/0811, G06F 12/0815, G06F 9/30, G06F 9/52

(54) **INSTRUCTION ATOMIQUE DE PORTÉE LOCALE LIMITÉE À UN NIVEAU DE CACHE INTERMÉDIAIRE**
ATOMARER BEFEHL VON LOKALER REICHWEITE, DER AUF EIN ZWISCHENCACHE-NIVEAU BESCHRÄNKT IST
ATOMIC INSTRUCTION HAVING A LOCAL SCOPE LIMITED TO AN INTERMEDIATE CACHE LEVEL

(30) Priorité: 07.03.2016 FR 1651869
(43) Date de publication de la demande: 13.09.2017
(73) Titulaire: Kalray, 91400 Orsay (FR)
(72) Inventeur: DUPONT DE DINECHIN, Benoît, 38000 Grenoble (FR); RYBCZYNSKA, Marta, 38100 GRENOBLE (FR); RAY, Vincent, 38700 LA TRONCHE (FR)
(74) Mandataire: de Jong, Jean Jacques

(56) Documents cités:
- WO-A1-2012/078775
- WO-A2-01/63240
- US-A1- 2010 287 342
- US-A1- 2011 289 276
- US-A1- 2013 061 020
- US-A1- 2013 159 812
- US-A1- 2013 290 583
- US-A1- 2015 242 324
- US-B1- 6 631 447
- US-B1- 7 996 632
- Anonymous: "Lock (computer science) - Wikipedia", , 17 January 2012 (2012-01-17), XP055370138, Retrieved from the Internet: URL:https://en.wikipedia.org/w/index.php?t itle=Lock_(computer_science)&oldid=4718184 63 [retrieved on 2017-05-08]

## Description

### Domaine technique

L'invention est relative aux instructions atomiques de type lecture-modification-écriture mises en oeuvre dans un processeur multi-coeur ayant une mémoire cache partagée, couramment une mémoire cache de niveau 2 ou supérieur.

### Arrière-plan

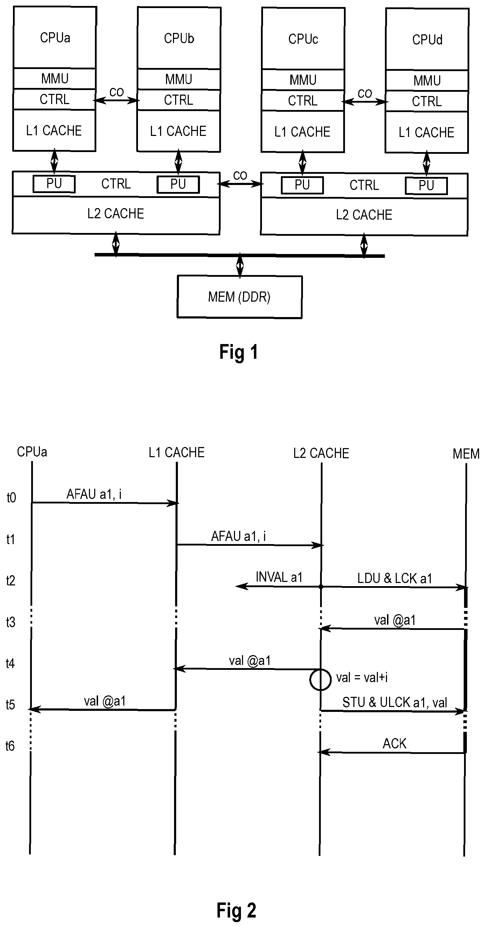

La figure 1 est un schéma simplifié d'un processeur quadri-coeur connecté à une mémoire système MEM, typiquement une mémoire dynamique DDR, par l'intermédiaire de deux niveaux de mémoires cache. Chaque coeur de processeur CPU possède sa propre mémoire cache L1 de niveau 1. Chaque paire de coeurs partage une mémoire cache L2 de niveau 2. Enfin, chaque mémoire cache L2 partage l'accès à la mémoire système MEM. Dans certains processeurs, on peut trouver en outre une mémoire cache de niveau 3 partagée entre les mémoires cache L2.

Chaque mémoire cache comprend un gestionnaire CTRL qui réalise les opérations mises en oeuvre dans la mémoire cache, y compris la gestion de la cohérence (co) entre les mémoires cache. Les coeurs de processeur opèrent généralement sur des adresses virtuelles, alors que les mémoires cache opèrent avec des adresses physiques. Une unité de gestion de mémoire ou MMU est ainsi généralement prévue entre chaque coeur de processeur et le gestionnaire CTRL associé pour traduire les adresses virtuelles en adresses physiques.

Dans un tel processeur, on peut avoir besoin de partager des données entre des morceaux de code, ou fils de programme, exécutés sur des coeurs différents, ce qui pose des difficultés compte tenu des multiples mémoires cache interposées entre les coeurs qui peuvent stocker des versions différentes des données partagées.

Pour permettre un partage fiable de données entre plusieurs coeurs, on a souvent recours à des instructions atomiques de type lecture-modification-écriture, par exemple les instructions dites « Fetch-and-Add » (lecture-et-addition, FA) ou « Compare-And-Swap » (comparaison-et-échange, CAS). Ces instructions ont pour caractéristique de produire un effet perçu comme instantané sur le contenu de la mémoire système, en d'autres termes les différentes opérations qui les composent, souvent la lecture d'une variable, la modification de la variable, et la récriture de la variable, sont exécutées en garantissant l'absence d'interférence externe sur la variable entre la lecture et la récriture. Pour garantir l'atomicité, une première technique repose sur un verrouillage de la mémoire système, interdisant tout accès à la mémoire, ou à une zone de la mémoire, par d'autres processus, même si ces processus n'accèdent pas à la variable concernée par la séquence de lecture-modification-écriture.

Une autre technique repose sur un protocole de cohérence de cache selon lequel la ligne de cache contenant la variable cible de l'instruction atomique est acquise en mode « exclusif » par le coeur exécutant l'instruction. Cette acquisition entraîne l'invalidation de la ligne dans les autres mémoires cache, en interdisant en outre aux autres coeurs d'y accéder, et ainsi d'accéder à la zone associée de la mémoire système, jusqu'à ce que le mode exclusif soit levé par le coeur l'ayant acquis.

Cette technique limite l'interdiction d'accès à seulement la zone mémoire correspondant à la ligne de cache, mais elle est complexe à réaliser, et présente des restrictions sur l'alignement des données.

Les deux techniques ont pour résultat de temporairement interdire l'accès à la variable partagée en mémoire, l'une utilisant un mécanisme mis en oeuvre au niveau de la mémoire système, l'autre un mécanisme mis en oeuvre au niveau des mémoires cache.

US 7 996 632 B1 divulgue un processeur configuré pour contrôler l'exécution d'instructions atomiques dans un cache.

US 2013/061020 A1 décrit un système remplaçant la cohérence totale à l'échelle du système par une cohérence partielle. Par exemple, chaque couple processeur-dispositif du système peut être cohérent. Cependant, chaque paire processeur-dispositif peut ne pas être cohérente par rapport aux autres paires processeur-dispositif, comme dans un système entièrement cohérent.

### Résumé

On prévoit de façon générale un processeur multi-coeurs selon la revendication 1. Des modes de réalisations préférentiels sont définis dans les revendications 2 à 4.

### Description sommaire des dessins

Des modes de réalisation seront exposés dans la description suivante, faite à titre non limitatif en relation avec les figures jointes parmi lesquelles :
- la figure 1, précédemment décrite, est un schéma simplifié d'un processeur quadri-coeur comprenant deux niveaux de mémoires cache ;
- la figure 2 est un chronogramme illustrant une mise en oeuvre d'une instruction atomique classique de lecture-et-addition, de portée globale ; et
- la figure 3 est un chronogramme illustrant une mise en oeuvre d'une instruction atomique de lecture-et-addition de portée locale.

### Description de modes de réalisation

La figure 2 illustre par un chronogramme une mise en oeuvre d'une instruction atomique classique de lecture-et-addition, à titre d'exemple, dans un système du type de la figure 1 et utilisant la méthode classique de verrouillage de la mémoire système évoquée ci-dessus. L'instruction est notée AFAU, pour Atomic Fetch-and-Add, le suffixe « U » signifiant hors-cache (« Uncached »), c'est-à-dire effective au niveau de la mémoire MEM. Une telle instruction prend comme paramètres l'adresse de la variable partagée et l'incrément à lui ajouter. L'instruction place le coeur en attente d'un acquittement, par exemple le retour de la valeur de la variable partagée avant sa modification.

A un instant t0, un coeur CPUa exécute une instruction AFAU a1, i, où le paramètre *a1* est l'adresse de la variable partagée et le paramètre *i* est l'incrément à lui ajouter. Les opérations atomiques peuvent être déléguées à l'une des mémoires cache, par exemple celle la plus proche de la mémoire système, L2, dont le circuit de gestion peut être pourvu d'une unité de traitement PU conçue pour mettre en oeuvre les opérations.

Ainsi, à l'instant t0, l'instruction atomique est transmise à la mémoire cache L1, qui la transmet à son tour, à l'instant 11, à la mémoire cache L2.

A un instant t2, en réponse à l'instruction atomique, la mémoire cache L2 exécute une commande LDU de lecture hors-cache (« LoaD Uncached ») à l'adresse *a1*, laquelle commande est associée à une commande de verrouillage LCK de la zone mémoire contenant l'adresse *a1.* La mémoire MEM réagit en verrouillant la zone, signifiant qu'à partir de l'instant t2 l'accès à la zone mémoire est réservé exclusivement au coeur CPUa ayant exécuté l'instruction atomique. L'intervalle de verrouillage est indiqué par un trait gras.

En outre, l'exécution d'une telle commande hors-cache active la gestion de cohérence des mémoires cache, par exemple en provoquant l'invalidation (INVAL a1) de la ligne de cache attribuée à l'adresse *a1* dans toutes les mémoires cache. Ainsi, un autre coeur qui accède en lecture à la variable provoque un rafraîchissement de sa mémoire cache avec la variable à jour dans la mémoire système. Si un tel accès a lieu pendant que la zone mémoire est verrouillée, il est mis en attente du déverrouillage de la zone mémoire.

A un instant t3, en réponse à la commande de lecture LDU, la mémoire renvoie la valeur *val* de la variable stockée à l'adresse *a1.* Il peut s'écouler un nombre relativement important de cycles d'horloge entre l'exécution de la commande LDU et le renvoi de la valeur *val.*

A un instant t4, la mémoire cache L2 renvoie la valeur lue *val* à la mémoire cache L1 et ajoute localement l'incrément *i* à la valeur *val.*

A un instant t5, la mémoire cache L1 renvoie la valeur lue *val* au coeur CPUa tandis que la mémoire cache L2 exécute une commande STU d'écriture hors-cache (« STore Uncached ») de la valeur modifiée de la variable à l'adresse *a1,* laquelle commande est associée à une commande de déverrouillage ULCK de la zone mémoire contenant l'adresse *a1.*

A un instant t6, en réponse à la commande STU, la mémoire système renvoie à la mémoire cache L2 un signal d'acquittement ACK indiquant la fin du verrouillage. Il peut s'écouler un nombre relativement important de cycles d'horloge entre l'exécution de la commande STU et le renvoi du signal d'acquittement. La mémoire système déverrouille alors la zone mémoire contenant l'adresse *a1.*

A partir de l'instant t6, les autres coeurs ont accès à la variable partagée à jour dans la mémoire système. Si un autre coeur a demandé la lecture de la variable partagée entre les instants t2 et t6, la variable ne lui est renvoyée qu'à partir de l'instant t6.

Les effets des commandes LDU et STU exécutées dans la mémoire cache L2, plus précisément par le gestionnaire de la mémoire cache, peuvent être similaires aux réponses de la mémoire cache à des instructions de même nom exécutées par le coeur. Cela signifie que la ligne de cache attribuée à l'adresse *a1* est mise à jour par ces instructions. Ainsi, après l'exécution de la commande d'écriture STU, la ligne de cache est à jour avec la valeur courante en mémoire de la variable.

L'intervalle de verrouillage de la mémoire système, indiqué en trait gras, peut être relativement important, du fait que la latence de la mémoire système peut être comptée en centaines de cycles de l'horloge des coeurs. Cette latence intervient deux fois pour chaque instruction atomique, une fois pour la commande de lecture LDU et une autre fois pour la commande d'écriture STU. Pendant que la mémoire système est verrouillée, aucun autre processus n'y a accès et est mis en attente, même si le processus n'accède pas à la variable partagée. On peut verrouiller des zones partielles de la mémoire, correspondant par exemple à des banques mémoire, mais ces zones restent relativement grandes de sorte que leur verrouillage est pénalisant pour les performances du système.

Dans des processeurs du type de la figure 1, on peut trouver des mémoires cache qui sont partagées par plusieurs coeurs, par exemple deux ou quatre pour une mémoire cache de niveau 2. Certains processeurs peuvent avoir une mémoire cache de niveau 3 qui est partagée par encore plus de coeurs. Par ailleurs, dans de nombreuses situations, on peut intervenir sur la répartition des fils de programme sur les coeurs de manière que des fils interdépendants soient affectés à des coeurs partageant une même mémoire cache. Par exemple, dans la figure 1, on affectera deux fils interdépendants respectivement aux coeurs CPUa et CPUb, ou CPUc et CPUd.

En outre, une variable partagée par un groupe de fils de programme interdépendants n'a généralement aucune utilité pour d'autres processus, notamment des processus qui pourraient être exécutés sur des coeurs qui ne partagent pas la mémoire cache. En d'autres termes, les autres processus n'ont pas besoin d'accéder à une valeur à jour de la variable partagée.

Sur ce constat, on propose d'introduire dans le jeu d'instructions du processeur des instructions atomiques de portée locale. Plus spécifiquement, une telle instruction n'est atomique que jusqu'à un niveau de mémoire cache intermédiaire. Dans un processeur comprenant plusieurs niveaux de mémoires cache partagées, on préfèrera attribuer l'instruction atomique de portée locale à la mémoire cache partagée la plus proche des coeurs.

Le jeu d'instructions du processeur comporte, en plus d'une famille d'instructions atomiques classiques (que l'on qualifiera de portée globale), une famille d'instructions atomiques de portée locale homologues. Ainsi, par exemple, si le processeur comporte une instruction atomique lecture-et-addition classique AFAU (Add-and-Fetch Uncached), on introduit son instruction homologue de portée locale ou « en-cache » AFA.

Alors, les instructions atomiques globales classiques pourront être utilisées dans des fils interdépendants exécutés sur des coeurs quelconques qui ne partagent pas forcément la même mémoire cache, tandis que les nouvelles instructions atomiques locales seront utilisées dans des fils interdépendants exécutés sur des coeurs qui partagent une mémoire cache.

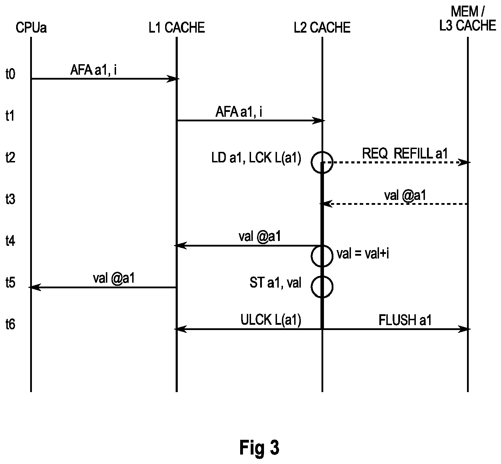

La figure 3 est un chronogramme illustrant un exemple de mise en oeuvre d'une instruction atomique de lecture-et-addition locale dans le cadre de l'exemple de processeur de la figure 1. Dans le processeur de la figure 1, la mémoire cache partagée la plus proche des coeurs est celle de niveau 2 (L2). Les instructions atomiques locales sont alors attribuées aux mémoires cache L2 dont le circuit de gestion sera configuré pour les traiter.

A un instant t0, le coeur CPUa exécute une instruction AFA a1, i, où le paramètre *a1* est l'adresse de la variable partagée et le paramètre *i* est l'incrément à lui ajouter. L'instruction est attribuée à la mémoire cache partagée la plus proche des coeurs, L2.

Ainsi, à l'instant t0, l'instruction atomique est transmise à la mémoire cache L1, qui la transmet à son tour, à l'instant 11, à la mémoire cache L2.

A un instant t2, en réponse à l'instruction atomique, la mémoire cache L2 exécute une commande LD de lecture en-cache à l'adresse *a1*, laquelle commande est associée à une commande de verrouillage LCK, non pas d'une zone mémoire, mais de la ligne de cache locale L(a1) attribuée à l'adresse *a1.*

Les lignes de cache sont soumises à des accès concurrents par les coeurs qui partagent cette mémoire cache. En pratique, comme cela est représenté dans la figure 1 pour les mémoires cache L2, le gestionnaire de la mémoire cache peut comprendre une unité de traitement indépendante PU associée à chaque coeur, et ce sont ces unités de traitement qui sont en concurrence pour initier des accès aux lignes de cache. A partir de l'instant t2 l'accès à la ligne de cache L(a1) est réservé exclusivement au coeur CPUa ayant exécuté l'instruction atomique. L'intervalle de verrouillage est indiqué par un trait gras.

L'effet de la commande de lecture LD (« LoaD ») peut être similaire à la réponse de la mémoire cache à une instruction de lecture de même nom exécutée par le coeur. Cette commande provoque alors, selon les mécanismes de gestion de cache habituels, la vérification de la validité de la ligne de cache attribuée à l'adresse *a1*, en d'autres termes si cette ligne est présente et n'a pas été invalidée par le mécanisme de gestion de cohérence. Si la ligne de cache est invalide ou absente (« cache-miss »), le gestionnaire de cache requiert sa mise à jour (REQ REFILL) à la mémoire aval, la mémoire aval pouvant être la mémoire système MEM, ou une mémoire cache de niveau supérieur (L3), si le processeur en comporte une.

A un instant t3, si une mise à jour a été requise, le nouveau contenu de la ligne de cache est reçu de la mémoire aval, incluant la valeur *val* à jour de la variable partagée à l'adresse *a1.*

Lors d'une mise à jour de ligne de cache, l'intervalle t2 à t3 correspond à la latence de la mémoire aval. Cependant, la ligne de cache a une probabilité non négligeable d'être valide, auquel cas la mise à jour de la ligne de cache est omise et l'intervalle t2 à t3 est nul, puisque le gestionnaire de mémoire cache peut enchaîner immédiatement les opérations suivantes.

A un instant t4, la mémoire cache L2 renvoie la valeur lue *val* à la mémoire cache L1 et ajoute localement l'incrément *i* à la valeur *val.*

A un instant t5, la mémoire cache L1 acquitte l'opération auprès du coeur CPUa, par exemple en renvoyant la valeur lue *val* au coeur CPUa. La mémoire cache L2 exécute une commande ST d'écriture (« STore ») de la variable modifiée à l'adresse *a1.* L'effet de la commande ST (« STore ») peut être similaire à la réponse de la mémoire cache à une instruction d'écriture de même nom exécutée par le coeur. Cette commande peut alors provoquer, selon les mécanismes de gestion de cache habituels, la mise à jour de la ligne de cache attribuée à l'adresse *a1*, et le marquage de la ligne comme « sale » (« dirty »). Alors, la ligne est par exemple mise dans un tampon d'écriture vers la mémoire système, et elle est invalidée dans les autres mémoires cache L2 selon le mécanisme de gestion de cohérence.

Selon une variante, on peut omettre d'invalider la ligne dans les autres mémoires cache de même niveau, puisque la variable modifiée est partagée seulement entre les coeurs connectés à la même mémoire cache. En d'autres termes, les autres coeurs pourront continuer à accéder sans latence aux données dans la ligne de leur mémoire cache et n'accéderont en principe pas à la variable partagée obsolète dans cette ligne.

A un instant t6, dès que la variable partagée est à jour dans la ligne de cache, la ligne de cache peut être déverrouillée (ULCK) et un acquittement peut être envoyé vers la mémoire cache L1. A partir de cet instant, la mémoire cache L2 peut vider son tampon d'écriture (FLUSH) vers la mémoire système MEM, ou vers une mémoire cache de niveau supérieur L3 qui répercute le vidage vers la mémoire système.

On s'aperçoit que l'intervalle de verrouillage de la ligne de cache est plus court que l'intervalle de verrouillage de la mémoire système dans le cas de la figure 2, notamment lorsque la variable partagée est à jour dans la ligne de cache, évitant la lecture de la mémoire aval entre les instants t2 et t3.

Un gain remarquable provient du fait que ce n'est pas la mémoire système qui est verrouillée, mais seulement une ligne de cache attribuée à l'adresse de la variable partagée. Les accès à d'autres lignes de cache et à l'ensemble de la mémoire système restent autorisés aux coeurs concurrents pendant les opérations atomiques locales.

Comme on l'a précédemment évoqué, dans certaines architectures de processeur, les instructions atomiques classiques peuvent être mises en oeuvre par une deuxième technique, reposant sur un protocole de cohérence de cache selon lequel la ligne de cache contenant la variable cible de l'instruction atomique est acquise en mode « exclusif » par le coeur exécutant l'instruction atomique. Dans une telle architecture, une instruction atomique de portée locale limitée à un niveau de cache (par exemple L2) améliore la réactivité par l'élimination du mode de verrouillage exclusif, nécessitant l'échange de messages entre les gestionnaires de cache de même niveau. En outre, comme la ligne de cache n'est pas verrouillée en mode exclusif, les coeurs reliés à une autre mémoire cache de même niveau continuent à avoir accès à leur ligne de cache de façon habituelle.

Dans ce qui précède, on a supposé que les portées des instructions atomiques (locale ou globale) étaient différenciées par des familles d'instructions atomiques dédiées du jeu d'instructions du processeur, c'est-à-dire ayant des codes opération (« opcode ») différents. Selon un autre mode de réalisation, on peut utiliser la même famille d'instructions atomiques, qu'on qualifiera de générique, et différencier la portée en utilisant des fonctionnalités classiquement offertes par une unité de gestion de mémoire MMU. En effet, une unité MMU permet d'associer divers modes de transaction mémoire à des plages d'adresses virtuelles et offre une grande souplesse pour traduire des plages d'adresses virtuelles vers des plages d'adresses physiques. Les modes des transactions mémoire sont généralement programmables par le système d'exploitation dans l'unité MMU en réglant des « attributs » associés aux plages d'adresses virtuelles.

Dans ce contexte, on propose de configurer l'unité MMU pour traduire deux plages d'adresses virtuelles distinctes vers une même plage d'adresses physiques contenant la variable partagée, et de différencier la portée de l'instruction atomique en réglant le mode des transactions mémoire. La première plage d'adresses virtuelles est associée à la portée locale, et on lui affecte pour cela un attribut « en-cache ». Le mode « en-cache » étant généralement le mode par défaut, ce mode est établi sans régler d'attribut particulier dans certains systèmes. La deuxième plage d'adresses virtuelles est associée à la portée globale, et on lui affecte pour cela un attribut « hors-cache ».

Les valeurs des attributs sont généralement véhiculées sur des lignes supplémentaires des bus d'adresses pour être prises en compte notamment par les contrôleurs de mémoire cache. Un contrôleur de mémoire cache reçoit ainsi l'adresse physique de la variable partagée - traduite par l'unité MMU à partir de l'une ou l'autre plage d'adresses virtuelles utilisée par l'instruction - et un attribut indicatif de la portée de l'instruction, dont la valeur dépend de la plage d'adresses virtuelles utilisée par l'instruction.

Avec cette configuration, le contrôleur de mémoire cache pourra mettre en oeuvre une même instruction atomique générique avec une portée locale ou globale selon que l'adresse virtuelle passée en paramètre de l'instruction pour accéder à la variable partagée se trouve dans la première ou la deuxième plage d'adresses virtuelles.

## Revendications

1. Processeur multi-coeurs comprenant :
• une mémoire cache (L2 CACHE) partagée par un groupe de plusieurs coeurs (CPUa, CPUb) configurés pour déléguer des instructions atomiques à la mémoire cache ;
• dans son jeu d'instructions, une instruction atomique de lecture-modification-écriture (AFAU), prenant comme paramètre une adresse mémoire d'une variable partagée, l'instruction atomique ayant une portée globale ;
• un gestionnaire de mémoire cache (CTRL) configuré pour recevoir et traiter chaque instruction atomique globale exécutée par un coeur donné du groupe en verrouillant globalement une plage d'adresses contenant l'adresse de la variable partagée, de sorte à interdire l'accès à la variable partagée à tout autre coeur pendant l'exécution de l'instruction atomique globale ;
dans lequel l'instruction atomique a en outre une portée locale, le gestionnaire de mémoire cache étant configuré pour traiter chaque instruction atomique locale exécutée par un coeur donné du groupe en verrouillant localement une ligne de cache associée à l'adresse de la variable partagée, tout en autorisant un accès à la variable partagée à des coeurs connectés à une autre mémoire cache de même niveau partagée par un autre groupe de plusieurs coeurs (CPUc, CPUd) pendant l'exécution de l'instruction atomique locale ;
le gestionnaire de mémoire cache étant configuré pour :
utiliser un protocole de cohérence de cache pour mettre en oeuvre les instructions atomiques globales, et pour, lors de l'exécution d'une instruction atomique locale, verrouiller localement la ligne de cache sans invalider ni verrouiller une ligne de cache homologue dans l'autre mémoire cache de même niveau, ou
verrouiller une zone d'une mémoire système contenant la variable partagée pendant l'exécution d'une instruction atomique globale, et pour, lors de l'exécution d'une instruction atomique locale, accéder à la variable dans la ligne de cache et ne verrouiller aucune zone de la mémoire système.

2. Processeur selon la revendication 1, dans lequel les portées globale et locale des instructions atomiques sont mises en oeuvre par deux instructions respectives dédiées du jeu d'instructions du processeur (AFAU, AFA).

3. Processeur selon la revendication 1, dans lequel les portées globale et locale des instructions atomiques sont mises en oeuvre par une même instruction du jeu d'instructions, et sont différenciées par l'utilisation de deux plages d'adresses virtuelles distinctes associées à une même plage d'adresses physiques contenant la variable partagée, le processeur comprenant une unité de gestion de mémoire (MMU) qui effectue une traduction des adresses virtuelles en adresses physiques, et qui associe un attribut « hors-cache » à la plage d'adresses virtuelles associée à la portée globale.

4. Processeur selon la revendication 1, dans lequel l'instruction atomique locale est une instruction de lecture-et-addition, ayant en outre comme paramètre une valeur d'incrément (i), le gestionnaire de mémoire cache étant configuré pour ajouter l'incrément à la variable.

## Patentansprüche

1. Mehrkernprozessor, umfassend:
• einen Cache-Speicher (L2 CACHE), der durch eine Gruppe mehrerer Kerne (CPUa, CPUb) gemeinsam genutzt wird und zum Delegieren von atomaren Befehlen an den Cache-Speicher konfiguriert ist;
• in seinem Befehlssatz, einen atomaren Lese-Modifizier-Schreib-Befehl (AFAU-Befehl), der als Parameter eine Speicheradresse einer gemeinsam genutzten Variablen benutzt, wobei der atomare Befehl eine globale Wirkung besitzt;
• ein Cache-Speicherverwaltungsprogramm (CTRL), das zum Empfangen und Verarbeiten jedes globalen atomaren Befehls konfiguriert ist, der durch einen gegebenen Kern der Gruppe durch globales Blockieren eines Adressenbereichs ausgeführt wird, der die Adresse der gemeinsam genutzten Variablen enthält, um den Zugriff auf die gemeinsam genutzte Variable für jeden anderen Kern während der Ausführung des globalen atomaren Befehls zu verhindern;
wobei der atomare Befehl ferner eine lokale Wirkung besitzt, wobei das Cache-Speicherverwaltungsprogramm zum Verarbeiten jedes lokalen atomaren Befehls konfiguriert ist, der durch einen gegebenen Kern der Gruppe durch lokales Blockieren einer Cache-Zeile ausgeführt wird, die der Adresse der gemeinsam genutzten Variablen zugeordnet ist, während ein Zugriff auf die gemeinsam genutzte Variable für Kerne zugelassen wird, die mit einem anderen Cache-Speicher der gleichen Ebene verbunden sind, der durch eine andere Gruppe mehrerer Kerne (CPUc, CPUd) während der Ausführung des lokalen atomaren Befehls gemeinsam genutzt wird;
wobei das Cache-Speicherverwaltungsprogramm konfiguriert ist zum:
Verwenden eines Cache-Kohärenzprotokolls zum Durchführen der globalen atomaren Befehle und zum, während der Ausführung eines lokalen atomaren Befehls, lokalen Blockieren der Cache-Zeile, ohne eine entsprechende Cache-Zeile in dem anderen Cache-Speicher der gleichen Ebene ungültig zu machen oder zu blockieren, oder
Blockieren eines Bereichs eines Systemspeichers, der die gemeinsam genutzte Variable enthält, während der Ausführung eines globalen atomaren Befehls und zum, während der Ausführung eines lokalen atomaren Befehls, Zugreifen auf die Variable in der Cache-Zeile und Blockieren keines Bereichs des Speichersystems.

2. Prozessor nach Anspruch 1, wobei die globale und die lokale Wirkung der atomaren Befehle durch zwei jeweilige dedizierte Befehle (AFAU, AFA) des Prozessorbefehlssatzes durchgeführt werden.

3. Prozessor nach Anspruch 1, wobei die globale und die lokale Wirkung der atomaren Befehle durch einen gleichen Befehl des Befehlssatzes durchgeführt werden und durch die Verwendung von zwei virtuellen verschiedenen Adressenbereichen unterschieden werden, die einem gleichen Bereich physikalischer Adressen zugeordnet sind, der die gemeinsam genutzte Variable enthält, der Prozessor umfassend eine Speicherverwaltung (MMU) für virtuelle Adresszuteilung, die eine Übersetzung der virtuellen Adressen in physikalische Adressen vornimmt und die dem virtuellen Adressenbereich, der der globalen Wirkung zugeordnet ist, ein Attribut "außerhalb des Caches" zuordnet.

4. Prozessor nach Anspruch 1, wobei der lokale atomare Befehl ein Lese-und-Addier-Befehl ist, der ferner als Parameter einen Inkrementwert (i) besitzt, wobei das Cache-Speicherverwaltungsprogramm zum Hinzufügen des Inkrements zu der Variablen konfiguriert ist.

## Claims

1. A multi-core processor comprising:
• a cache memory (L2 CACHE) shared by a group of several cores (CPUa, CPUb) configured to delegate atomic instructions to the cache memory;
• in its instruction set, an atomic read-modify-write instruction (AFAU), taking as a parameter a memory address of a shared variable, wherein the atomic instruction has a global scope;
• a cache memory controller (CTRL) configured for receiving and processing each global atomic instruction executed by a given core of the group by globally locking an address space containing the address of the shared variable, to prevent access to the shared variable by any other core during execution of the global atomic instruction;
wherein the atomic instruction also has a local scope, the cache memory controller being configured for processing each local atomic instruction executed by a given core of the group by locally locking a cache line allocated to the address of the shared variable, while authorizing access to the shared variable to cores connected to another cache memory of same level shared by another group of several cores (CPUc, CPUd) during execution of the local atomic instruction;
wherein the cache memory controller is configured for:
using a cache coherence protocol for implementing the global atomic instructions, and for, during execution of a local atomic instruction, locally locking the cache line without invalidating nor locking an analogous cache line in the other cache memory of same-level, or
locking a system memory area containing the shared variable during execution of a global atomic instruction, and for, during execution of a local atomic instruction, accessing the variable in the cache line without locking any area of the system memory.

2. The processor of claim 1, wherein the global and local scopes of the atomic instructions are implemented by two respective dedicated instructions of the processor instruction set (AFAU, AFA).

3. The processor of claim 1, wherein the global and local scopes of the atomic instructions are implemented by a same instruction of the processor instruction set, and are differentiated by using two distinct virtual address spaces assigned to a same physical address space containing the shared variable, the processor including a memory management unit (MMU) for performing virtual to physical address translations, and which assigns an "uncached" attribute to the virtual address space associated to the global scope.

4. The processor of claim 1, wherein the local atomic instruction is a fetch-and-add instruction, having as an additional parameter an increment value (i), and the cache controller is configured to add the increment to the variable.
